# EUROPÄISCHE PATENTANMELDUNG

(11) **EP 1 635 132 A1**
(43) Veröffentlichungstag der Anmeldung: **15.03.2006**
(21) Anmeldenummer: 05016188.4
(22) Anmeldetag: 26.07.2005
(51) Int. Cl.: F28F 9/00

(54) **Befestigungsanordnung für einen Ladeluftkühler, insbesondere ein Kühlmodul**

(30) Priorität: 14.09.2004 DE 102004044872
(71) Anmelder: Behr GmbH & Co. KG, 70469 Stuttgart (DE)
(72) Erfinder: Augenstein, Claus, Dipl.-Ing. (FH), 70839 Gerlingen (DE); Kull, Reinhard, 71642 Ludwigsburg (DE); Schnittger, Karsten, Dipl.-Ing., 70439 Stuttgart (DE)

(57) **Zusammenfassung**

Die Erfindung betrifft eine Befestigungsanordnung für einen Ladeluftkühler (1), insbesondere ein Kühlmodul in einem Kraftfahrzeug, wobei der Ladeluftkühler (1) Luftkästen (3, 4) mit Ladeluftstutzen (7, 8) für den Eintritt und den Austritt der Ladeluft und einen mit den Ladeluftkästen (3, 4) verbundenen Rohr/Rippen-Block (2) aufweist und wobei im Bereich der Ladeluftstutzen Befestigungsmittel vorgesehen sind.

Es wird vorgeschlagen, dass die Befestigungsmittel als Querholm (12) ausgebildet sind, der einerseits an den Ladeluftstutzen (7, 8) befestigt und andererseits am Kraftfahrzeug (15) angelenkt ist.

## Beschreibung

Die Erfindung betrifft eine Befestigungsanordnung für einen Wärmeübertrager, insbesondere ein Kühlmodul in einem Kraftfahrzeug nach dem Oberbegriff des Patentanspruches 1.

Ladeluftkühler und Kühlmittelkühler eines Kraftfahrzeuges werden meistens zu einem Kühlmodul zusammengefasst und gemeinsam im vorderen Motorraum des Kraftfahrzeuges befestigt. Vielfach sind an diesem Kühlmodul noch weitere Wärmeübertrager wie Kondensatoren oder Ölkühler befestigt. Als Träger für das Kühlmodul kann entweder der Kühlmittelkühler dienen, wobei die anderen Wärmeübertrager am Kühlmittelkühler befestigt sind, oder der Ladeluftkühler dient als Träger des Kühlmoduls, wobei Kühlmittelkühler und andere Wärmeübertrager am Ladeluftkühler befestigt sind. Während der Kühlmittelkühler über Kühlmittelstutzen an einen Kühlmittefkreislauf des Verbrennungsmotors angeschlossen ist, steht der Ladeluftkühler einerseits mit dem Ausgang eines Verdichters und andererseits mit dem Ansaugtrakt des Verbrennungsmotors in Verbindung. Die verdichtete, erwärmte Luft tritt über Stutzen in einen Luftkasten ein, durchströmt den Block des Ladeluftkühlers und tritt über einen weiteren Luftkasten und dessen Austrittsstutzen wieder aus dem Ladeluftkühler aus. In den Ladeluftstutzen wirken in Abhängigkeit von deren Querschnitten und dem statischen Druck der Ladeluft nicht uner-hebliche Gaskräfte, die zu einer resultierenden Kraft auf die Stutzen führen. Die Abstützung dieser resultierenden Kräfte ist bei der Lagerung und Abstützung des Ladeluftkühlers zu berücksichtigen. Andernfalls kann es zu hohen Beanspruchungen zwischen Luftkasten und Rohrboden und/oder zwischen Rohren und Rohrboden kommen. Um die Bildung von kritischen Biege- und Torsionsmomenten durch diese Gaskräfte zu vermeiden, wird versucht, die Lager für den Ladeluftkühler beziehungsweise des Kühlmoduls in die Nähe des Ladeluftstutzens zu legen.

Eine derartige Lagerung für ein Kühlmodul, bestehend aus Ladeluftkühler und Kühlmittelkühler, wurde durch die DE-A 199 53 785 der Anmelderin bekannt. Die Ladeluftstutzen sind hier im mittleren Bereich der etwa senkrecht angeordneten Ladeluftkästen angeordnet, und die Lagerpunkte für das Kühlmodul und den Ladeluftkühler liegen im unmittelbar benachbarten Bereich der Ladeluftstutzen, Damit können Biegemomente vermieden und die Gaskräfte unmittelbar in den Fahrzeugrahmen eingeleitet werden. Der Ladeluftkühler ist mit seinen Ladeluftkästen Träger des gesamten Kühlmoduls - dies macht ein aufwendiges und kompaktes Lager an den Kunststoffkästen des Ladeluftkühlers erforderlich.

Durch die DE-A 199 09 672 der Anmelderin wurde ein Kühlmodul, bestehend aus Ladeluft- und Kühlmittelkühler, bekannt, bei welchem die Kunststoffkästen beider Wärmeübertrager durch Schraubbolzen oder ähnliche Spannelemente miteinander verblockt sind, um somit ein steifes Gebilde zu erzielen, welches die am Luftkasten des Ladeluftkühlers wirkenden Gaskräfte ohne Beeinträchtigung aufnehmen kann, insbesondere der Kasten/Boden- und der Rohr/Boden-Verbindungen. Die in den Ladeluftstutzen wirkenden Gaskräfte werden somit sowohl vom Luftkasten des Ladeluftkühlers als auch gleichzeitig vom Kühlmittelkasten des Kühlmittelkühlers aufgenommen. Über die Befestigung des Kühlmoduls am Fahrzeugrahmen ist in dieser Druckschrift wenig offenbart.

Durch die DE-A 100 18 001 der Anmelderin wurde eine Lagerung eines Kühlmoduls, bestehend aus Ladeluftkühler und Kühlmittelkühler, auf einem Fahrzeugrahmen eines Kraftfahrzeuges bekannt, und zwar mittels Befestigungslaschen, die einerseits an den Ladeluftstutzen des Ladeluftkühler und andererseits an Längsträgem des Kraftfahrzeuges elastisch befestigt sind.

Die Ladeluftatutzen befinden sich im mittleren Bereich der Ladeluftkästen, d. h. etwa auf Höhe des Schwerpunktes des Kühlmoduls bzw. im Bereich der Nickachse des Kühlmoduls (y-Richtung). Auch durch diese Lagerung werden Biegemomente weitestgehend vermieden, und man erreicht eine nahezu direkte Einleitung der Gaskräfte über die Ladeluftstutzen in den Fahrzeugrahmen. Auch hier ist der Ladeluftkühler Träger des Kühlmoduls und stützt sich über seine Ladeluftstutzen am Fahrzeug ab, was eine entsprechende Dimensionierung erforderlich macht.

Es ist Aufgabe der vorliegenden Erfindung, eine Befestigungsanordnung für einen Ladeluftkühler der eingangs genannten Art zu schaffen, welche mit möglichst einfach und kostengünstig ausgebildeten Befestigungsmitteln die auftretenden Kräfte beherrscht und eine Beanspruchung des Ladeluftkühlers selbst weitestgehend vermeidet.

Diese Aufgabe wird durch die Merkmale des Patenanspruches 1 gelöst. Erfindungsgemäß ist zwischen den Stutzen ein Querholm vorgesehen, welcher sich einerseits an den Stutzen und andererseits am Fahrzeug (Rahmen) abstützt. Dadurch wird der Vorteil erreicht, dass die in den Stutzen wirkenden Gaskräfte über den Querholm direkt in den Fahrzeugrahmen eingeleitet werden und den Wärmeübertrager selbst, d. h. insbesondere den Rohr/Rippen-Block mit Rohr/Bodenverbindung und die Kasten/Bodenverbindung nicht belasten. Der Wärmeübertrager kann somit leichter ausgebildet werden, da die Spannungen im Block reduziert werden.

In weiterer vorteilhafter Ausgestaltung der Erfindung weist der Wärmeübertrager weitere Befestigungsmittel auf, welche im Wesentlichen das Gewicht und die Massenkräfte des Wärmeübertragers aufnehmen. Vorteilhafterweise sind zwei Lagerpunkte vorgesehen, die etwa auf der Höhe des Schwerpunktes, d. h. im Bereich der Nickachse des Wärmeübertragers (y-Richtung des Fahrzeuges) angeordnet sind. Die Nickbewegung des Wärmeübertragers wird somit durch den im Abstand angeordneten Querholm abgefangen.

In weiterer vorteilhafter Ausgestaltung der Erfindung ist an dem Wärmeübertrager ein weiterer Wärmeübertrager befestigt - beide Wärmeübertrager bilden ein Kühlmodul, an welchem möglicherweise noch weitere Wärmeübertrager wie ein Kondensator oder Ölkühler befestigt sein können. Die Befestigung der einzelnen Wärmeübertrager untereinander ist aus dem eingangs genannten Stand der Technik bekannt. Der erste Wärmeübertrager, insbesondere Ladeluftkühler ist also Träger des gesamten Kühlmoduls.

In vorteilhafter Weiterbildung der Erfindung ist der Querholm über Lagerbökke oder ähnliche Befestigungselemente mit den Stutzen verbunden, so dass auftretende Kräfte unter Umständen direkt in den Querholm eingeleitet werden und der Block des Wärmeübertragers nicht durch die genannten Kräfte beansprucht wird. Die Lagerböcke können geteilt sein, damit der Querholm in die Lagerschalen eingelegt und verspannt werden kann. Vorteilhafterweise ist ein Lager als Fest-, das andere als Loslager ausgebildet. Damit wird der Vorteil erreicht, dass Wärmedehnungen des Blockes nicht über die Sammelkästen auf den Querholm übertragen werden und dort zu Wärmespannungen führen. Der Querholm ist somit um seine Lärtgsachse ― beim Einbau ― schwenkbar, d. h. einstellbar.

In weiterer vorteilhafter Ausgestaltung der Erfindung ist der Querholm als Haltebügel ausgebildet, d. h. seine Enden sind abgewinkelt und umfassen die Sammelkästen. Dadurch ergibt sich eine Raum sparende, leichte Befestigungsanordnung. In weiterer vorteilhafter Ausführung der Erfindung ist der Querholm so ausgeführt, dass die eingeleiteten Abstützkräfte zu einer weitgehend symmetrischen elastischen Verformung des Querholmes führen.

In weiterer vorteilhafter Ausgestaltung der Erfindung ist an Stelle des Haltebügels ein Querholm mit Zug- oder Druckstreben vorgesehen, wobei die Zug- beziehungsweise Druckstreben gegenüber der Horizontalen waagerecht oder geneigt angeordnet sind, beispielsweise unter einem Winkel von 0 ≤α≤45 Grad. Damit wird der Vorteil erreicht, dass der Haltebügel bzw. die Zugstreben nicht nur Kräfte in x-Richtung (Fahrtrichtung des Kraftfahrzeuges), sondern auch in z-Richtung (senkrechter Richtung) aufnehmen können.

In weiterer vorteilhafter Ausgestaltung der Erfindung sind die Stutzen an den Schmalseiten, d. h. vorzugsweise im oberen Bereich des Wärmeübertragers angeordnet, d. h. oberhalb des Rohr/Rippenblockes. Vorteilhafterweise ist der Querholm bzw. der Haltebügel daher auch oberhalb bzw. am oberen Rande des Rohr/Rippen-Blockes angeordnet, d. h. außerhalb der von Umgebungsluft durchströmten Stirnfläche. Zwischen den Stutzen ist daher auch hinreichend Raum zur Anbringung der Lagerböcke für die Aufnahme des Querholmes.

Die Erfindung wird auch durch die Merkmale des Patentanspruches 12, alleine oder in Kombination mit Merkmalen anderer Ansprüche, gelöst, welcher eine vorteilhafte Altemative darstellt. Erfindungsgemäß sind statt des Querholmes und des Haltebügels Zugseile vorgesehen, die einerseits an den Stutzen des Wärmeübertragers und andererseits am Fahrzeugrahmen oder am Motor des Kraftfahrzeuges befestigt sind. Damit können die in den Stutzen wirkenden Gaskräfte in äquivalenter Weise direkt in den Fahrzeugrahmen eingeleitet werden, ohne dass der Block belastet wird.

Ein Ausführungsbeispiel der Erfindung ist in der Zeichnung dargestellt und wird im Folgenden näher beschrieben. Es zeigen
- Fig. 1: einen Ladeluftkühler mit Querholm in perspektivischer Darstellung und
- Fig. 2: den Ladeluftkühler mit Querholm in einer Seitenansicht.

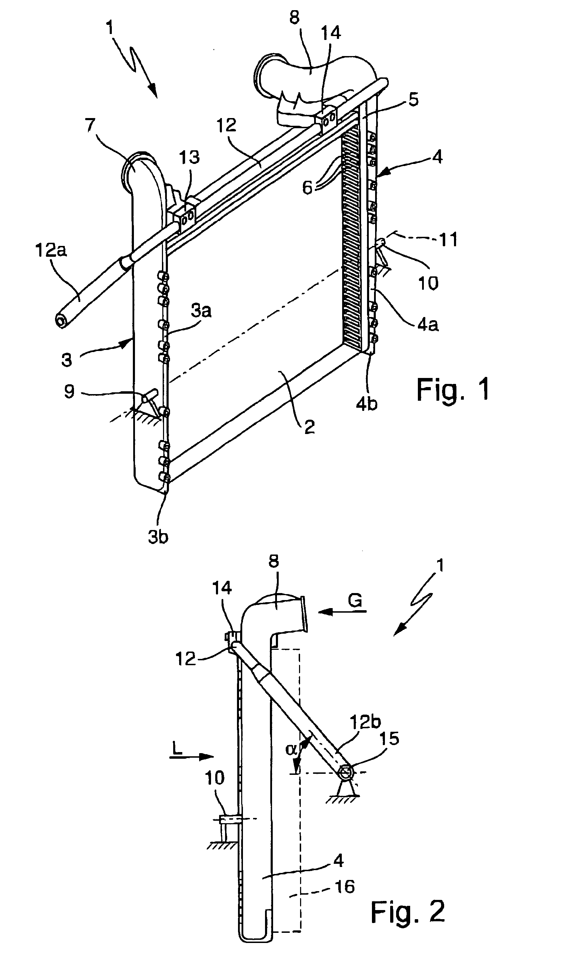

Fig. 1 zeigt einen Ladeluftkühler 1 mit einem nicht vollständig dargestellten Block 2, welcher aus Rohren und Rippen besteht, vorzugsweise miteinander verlöteten Flachrohren und Wellrippen sowie mit zwei rechts und links senkrecht angeordneten Ladeluftkästen 3, 4. Ein Rohrboden 5 ist mit dem Ladeluftkasten 4 verbunden und weist eine Vielzahl von Durchzügen 6 auf, in welche nicht dargestellte Flachrohre eingesetzt und mit dem Rohrboden 5 verlötet sind. Die Ladeluftkästen 3, 4 weisen senkrecht angeordnete Längsseiten 3a, 4a und waagerecht verlaufende untere Schmalseiten 3b, 4b auf. Im Bereich der oberen Schmalseiten sind Ladeluftstutzen 7, 8 angeformt, d. h. vorzugsweise einstückig mit den Ladeluftkästen 3, 4 ausgebildet, welche aus Kunststoff oder Aluminium, insbesondere durch Druckguss oder Innenhochdruckumformung hergestellt sein können.

An den Ladeluftkästen 3, 4 sind zwei schematisch dargestellte Befestigungsstellen bzw. Lagerpunkte 9, 10 angeordnet, über welche sich der Ladeluftkühler 1 gegenüber dem Fahrzeugrahmen eines nicht dargestellten Kraftfahrzeuges abstützt. Durch beide Lagerpunkte 9, 10 verläuft eine strichpunktiert angedeutete Achse 11, etwa in der Höhe eines nicht dargestellten Schwerpunktes. Der Ladeluftkühler 1 ist in der in der Zeichnung dargestellten Position im Kraftfahrzeug eingebaut. Im oberen Bereich des Blockes 2 ist ein Querholm 12 angeordnet, welcher in einem mit dem Ladeluftstutzen 7 verbunden Lager 13 und einem mit dem Ladeluftstutzen 8 verbundenen Lager 14 befestigt ist.

Die Lager 13, 14 sind als geteilte Lagerböcke ausgebildet und können einstückig mit dem Ladeluftstutzen 7, 8 ausgebildet oder mit diesen verschraubt oder verschweißt sein. Der Querholm 12 erstreckt sich in waagerechter Richtung über die beiden Ladeluftkästen 3 und 4 hinaus und geht in seitlich abgebogene Haltarme 12a, 12b über (12b ist in Fig. 1 nicht sichtbar). Querholm 12 und Haltearme 12a, 12b bilden somit einen Haltebügel, welcher den Ladeluftkühler 1 umfasst.

**Fig. 2** zeigt den Ladeluftkühler 1 in einer Seitenansicht, d. h. mit Blick auf den Ladeluftkasten 4 und den Ladeluftstutzen 8, auf welchen eine Gaskraft G, dargestellt durch einen Pfeil G wirkt. Die gleiche Gaskraft G wirkt auf den verdeckten Ladeluftstutzen 7. Etwa auf Höhe der resultierenden Gaskraft G ist das Lager 14 zur Aufnahme des Querholmes 12 am Ladeluftstutzen 8 befestigt. Der Querholm 12 ist mit dem Haltearm 12b verbunden, welcher gegenüber einer Horizontalen um den Winkel a, z. B. 45° geneigt und in einem schematisch dargestellten fahrzeugfesten Lager 15 angelenkt ist, d. h. am Fahrzeugrahmen oder Motor.

Die Fahrtrichtung des nicht dargestellten Kraftfahrzeuges entspricht dem Pfeil G, d. h. der Ladeluftkühler 1 wird in entgegengesetzter Richtung, dargestellt durch einen Pfeil L, von Umgebungsluft durchströmt. In Luftströmungsrichtung hinter dem Ladeluftkühler 1 ist - gestrichelt und schematisch dargestellt - ein Kühlmittelkühler 16 angeordnet und mit dem Ladeluftkühler 1 befestigt. Somit bilden Ladeluftkühler 1 und Kühlmittelkühler 16 ein Kühlmodul, bei welchem der Ladeluftkühler 1 als Träger fungiert. Das gesamte Gewicht des Kühlmoduls ruht somit auf den beiden Lagern 9, 10, während die Gaskräfte G unmittelbar über den Haltebügel 12, 12a, 12b weitgehend in den Fahrzeugrahmen 15 eingeleitet werden. Dadurch wird der Block 2 des Ladeluftkühlers 1 durch die Gaskräfte G weniger beansprucht.

Die vorliegende Erfindung wurde anhand einer Befestigungsanordnung für einen Ladeluftkühler beschrieben. Es wird jedoch darauf hingewiesen, dass die erfindungsgemäße Befestigungsanordnung auch für andere Zwecke geeignet ist. Insbesondere ist eine erfindungsgemäße Anordnung für eine Befestigung eines Kühlmittelkühlers, Ölkühlers, Kondensators, Verdampfers oder Heizkörpers einsetzbar.

## Patentansprüche

1. Befestigungsanordnung für einen Wärmeübertrager (1), insbesondere ein Kühlmodul in einem Kraftfahrzeug, wobei der Wärmeübertrager (1), insbesondere ein Ladeluftkühler, Sammelkästen (3, 4) mit Stutzen (7, 8) für den Eintritt und den Austritt eines ersten Mediums, insbesondere Ladeluft, und vorzugsweise einen mit den Sammelkästen (3, 4) verbundenen Rohr/Rippen-Block (2) aufweist und wobei im Bereich der Stutzen Befestigungsmittel vorgesehen sind, **dadurch gekennzeichnet, dass** die Befestigungsmittel als Querholm (12) ausgebildet sind, der einerseits an den Stutzen (7, 8) befestigbar und andererseits am Kraftfahrzeug (15) anlenkbar ist.

2. Anordnung nach Anspruch 1, **dadurch gekennzeichnet, dass** der Wärmeübertrager (1) weitere Befestigungsmittel (9, 10) zur Lagerung im Kraftfahrzeug aufweist, insbesondere im Bereich einer Querachse (11).

3. Anordnung nach Anspruch 1 oder 2, **dadurch gekennzeichnet, dass** am Wärmeübertrager (1) ein weiterer Wärmeübertrager, insbesondere Kühlmittelkühler (16) befestigt und über den Wärmeübertrager (1) gegenüber dem Kraftfahrzeug abgestützt ist.

4. Anordnung nach Anspruch 1, 2 oder 3, **dadurch gekennzeichnet, dass** an den Stutzen (7, 8) Lagerstellen (13, 14), insbesondere Lagerböcke zur Aufnahme des Querholmes (12) vorgesehen und/oder befestigt sind.

5. Anordnung nach Anspruch 4, **dadurch gekennzeichnet, dass** die Lagerstellen (13, 14) als Fest- und Loslager ausgebildet sind.

6. Anordnung nach Anspruch 4, **dadurch gekennzeichnet, dass** die Lagerstellen (13, 14) als Festlager ausgebildet sind und der Querholm in einer zumindest zweiteiligen Ausführung einen Schiebesitz zwischen den Lagerstellen aufweist.

7. Anordnung nach Anspruch 4, **dadurch gekennzeichnet, dass** die Lagerstellen (13, 14) Loslager, insbesondere als Gummilager ausgebildet sind.

8. Anordnung nach einem der Ansprüche 1 bis 7, **dadurch gekennzeichnet, dass** sich der Querholm (12) seitlich über die Sammelkästen (3, 4) vorzugsweise hinauserstreckt und als Haltebügel mit abgewinkelten Haltearmen (12a, 12b) ausgebildet ist.

9. Anordnung nach einem der Ansprüche 1 bis 7, **dadurch gekennzeichnet, dass** der Querholm (12) als Rohr ausgebildet ist und seitlich über die Sammelkästen (3, 4) hinausstehende Rohrenden aufweist, an welchen Zugstreben angelenkt sind.

10. Anordnung nach einem der Ansprüche 1 bis 9, **dadurch gekennzeichnet, dass** die Sammelkästen (3, 4) Längsseiten (3a, 4a) und Schmalseiten aufweisen und dass die Stutzen (7, 8) im Bereich der Schmalseiten angeordnet sind.

11. Anordnung nach einem der Ansprüche 1 bis 10, **dadurch gekennzeichnet, dass** der Querholm (12) waagerecht und oberhalb des Rohr/Rippen-Blockes (2) angeordnet ist.

12. Befestigungsanordnung für einen Wärmeübertrager (1), insbesondere ein Kühlmodul in einem Kraftfahrzeug, wobei der Wärmeübertrager (1), insbesondere ein Ladeluftkühler, Sammelkästen (3, 4) mit Stutzen (7, 8) für den Eintritt und den Austritt eines ersten Mediums, insbesondere Ladeluft, und vorzugsweise einen mit den Sammelkästen (3, 4) verbundenen Rohr/Rippen-Block (2) aufweist und wobei im Bereich der Stutzen Befestigungsmittel vorgesehen sind, **dadurch gekennzeichnet, dass** die Befestigungsmittel als Zugseile ausgebildet sind, welche einerseits an den Stutzen und andererseits am Fahrzeug befestigbar sind.
